# EUROPÄISCHE PATENTSCHRIFT

(11) **EP 3 977 416 B1**
(45) Veröffentlichungstag und Bekanntmachung des Hinweises auf die Patenterteilung: **12.07.2023**
(21) Anmeldenummer: 20728687.3
(22) Anmeldetag: 15.05.2020
(51) Int. Cl.: G06T 19/00, G06F 3/0346, G06T 7/73, G06T 15/00

(54) **VISUALISIERUNGSANORDNUNG**
VISUALISATION ASSEMBLY
DISPOSITIF DE VISUALISATION

(30) Priorität: 29.05.2019 DE 102019114495
(43) Veröffentlichungstag der Anmeldung: 06.04.2022
(73) Patentinhaber: Hoch, Alexander, 75233 Tiefenbronn (DE)
(72) Erfinder: Hoch, Alexander, 75233 Tiefenbronn (DE)
(74) Vertreter: Wacker, Jost Oliver
(86) Internationale Anmeldenummer: PCT/EP2020/063712
(87) Internationale Veröffentlichungsnummer: WO 2020/239482

(56) Entgegenhaltungen:
- DE-U1- 20 203 367
- US-A1- 2012 194 859
- US-B1- 9 761 045

## Beschreibung

Die Erfindung betrifft eine Visualisierungsanordnung, wie insbesondere zur Wiedergabe eines Modells eines Fortbewegungsmittels, wie insbesondere eines Automobils, nach dem Oberbegriff des Anspruchs 1 sowie ein Verfahren zum Betrieb eines solchen Visualisierungsanordnung. Die Visualisierungsanordnung weist dabei ein physisches Projektionsobjekt auf, das eine sich 3-dimensional, im Wesentlichen konvex erstreckende Projektionsoberfläche beinhaltet. Zudem ist eine elektronische Visualisierungsvorrichtung vorgesehen, wobei die Visualisierungsvorrichtung eine Kamera zur optischen Erfassung des physischen Projektionsobjektes aufweist. Ferner weist die Visualisierungsanordnung eine Elektronik mit einer Datenverarbeitungssoftware auf, mittels der Bilddaten aus der optischen Erfassung des physischen Projektionsobjektes generiert werden können. Zudem ermöglicht die Datenverarbeitungssoftware die Erstellung eines gerenderten VR-Modells auf Basis der generierten Bilddaten und zuvor gespeicherter Modelldaten. Ferner weist die Visualisierungsanordnung eine Anzeigeeinrichtung auf, an der das mit dem gerenderten VR-Modell überlagerte physische Projektionsobjekt angezeigt werden kann.

Aus DE20203367U1 ist eine Vorrichtung zur Visualisierung eines Kraftfahrzeugdesignmodells bekannt, durch das die auf einem Tonmodell basierende Designphase verbessert beziehungsweise verkürzt werden soll. Hierzu wird ein Tonmodell aufgebaut, das als Projektionsobjekt dient, innerhalb dessen äußeren Begrenzung mögliche Designvarianten als Augmentierungsobjekte dargestellt werden können. Dabei wird das reale Tonmodell beziehungsweise ein betreffender Teil dieses Tonmodells mit wenigstens einer virtuellen Designstudie wie beispielsweise eines Rad-Reifens, eines Scheinwerfers, von Leuchten, eines Kühlergrills, von Fugenverläufen oder verschiedener Vorder- /Heckansichten überlagert beziehungsweise augmentiert. Die virtuellen Designstudien dienen dabei insbesondere zur Darstellung von Varianten die beispielsweise zur Vorauswahl einer begrenzten Anzahl von Ausführungsformen genutzt werden kann, anhand derer dann aufwändige Design-Prototypen erstellt werden.

Derartige Designvisualisierungen dienen somit dazu, ein mit einem Design zu versehendes 3-dimensionales Objekt mit einem sich entsprechend erstreckenden virtuellen 3-dimensionalen Designmodell zu überlagern, um verschiedene Designvarianten des Objekts möglichst realitätsnah erfahrbar zu machen. Vor diesem Hintergrund weisen die bekannten Visualisierungsvorrichtungen eine möglichst hohe Übereinstimmung zwischen dem physischen Projektionsobjekt und den zu augmentierenden Modellen auf.

US 9,761,045 B1 beschreibt eine Vorgehensweise zur Überlagerung einer mittels Kamera aufgenommenen Umgebung mit einem 3D-Modell, die in verschiedenen Blickrichtungen erstellt wird. Um hierbei bei entsprechenden Blickwinkeln eine teilweise Abdeckung eines sich ins Innere eines Gebäudes hinein erstreckenden 3D-Modells durch eine reale Außenwand des Gehäuses zu vermeiden, ist eine Erweiterung des 3D-Modells um ein virtuelles Fenster vorgesehen. Das Fenster dient dabei zur Überlagerung des verdeckenden Teils der Gebäudewand und zur Darstellung des verdeckten Bereichs.

US2012/0194859 A1 zeigt eine tragbare Computereinrichtung, die mittels einer Kamera mehrere Marker an einem Druckergerät erfasst. In Abhängigkeit der erfassten Marker werden dann Informationen in Form einer Augmented Reality angezeigt, wie Bedienungs- oder Wartungsanleitungen.

Insbesondere bei der Vermarktung von Fortbewegungsmitteln und bei Artikeln für Liebhaber von Fortbewegungsmitteln besteht ebenfalls ein Bedarf an Modellen, die eine hohe Realitätsnähe vermitteln und/oder besondere technische Effekte erzeugen.

Die oben beschriebenen Visualisierungsvorrichtungen sind für diese Verwendungszwecke bislang weder bekannt noch geeignet, da sie insbesondere aufgrund der für die Designstudien notwendigen Ausformung und materiellen Beschaffenheit, weder in geeigneter Weise dimensioniert noch in wirtschaftlicher Weise herstellbar sind.

Die Aufgabe der Erfindung ist es, bei einer Visualisierungsanordnung die genannten Nachteile zu vermeiden und eine komfortable und ansprechende Verwendung für Marketingzwecke oder als Liebhaberartikel von Fortbewegungsmitteln zu ermöglichen.

Diese Aufgabe wird durch eine Visualisierungsanordnung mit den Merkmalen des Anspruchs 1 gelöst. Dabei formt das physische Projektionsobjekt ein Relief, wie insbesondere ein Hochrelief, das sich lediglich über einen Teil des gerenderten VR-Modells erstreckt. Hierbei weist das Projektionsobjekt eine Grundfläche auf, von der sich das Relief weg erstreckt, wobei die Grundfläche beispielsweise durch eine Grundplatte beziehungsweise einen Spiegel gebildet ist. Hierdurch lässt sich das Projektionsobjekt in der Art eines Bildes verwenden und handhaben, bei dem sich das an der Anzeigeeinrichtung erzeugte VR-Modell in die Grundfläche des Projektionsobjekts hinein erstreckt. Weitere über die Erstreckung des Reliefs hinausreichende Teile des VR-Modells, die beispielsweise für eine realistische Wiedergabe einer Front- oder Heckseite benötigt werden, werden lediglich virtuell durch das VR-Modell erzeugt. Hierdurch erhält man ein leicht zu handhabendes physisches Projektionsobjekt, an dem ein Teilmodell ausgeformt ist und das mit einem virtuell vervollständigten VR-Modell überlagert wird. Das Projektionsobjekt kann dabei als Bezugsobjekt verwendet werden, um in Abhängigkeit des Blickwinkels der Kamera auf das Projektionsobjekt ein vervollständigendes VR-Modell in der gleichen Perspektive zu erstellen und das Projektionsobjekt auf diese Weise zu augmentieren, wie insbesondere in Echtzeit. Hierdurch kann das Projektionsobjekt beispielsweise als besonderes Accessoire oder Gestaltungsobjekt für die Vermarktung oder als Artikel für Liebhaber der dargestellten Fortbewegungsmittel, wie insbesondere hochwertiger Fahrzeuge, verwendet werden. Durch die relativ flache und kompakte Form kann es dabei in der Art eines Bildes oder Gemäldes insbesondere an einer Wand positioniert und bei Bedarf mittels der Visualisierungsvorrichtung augmentiert werden.

In einer besonders bevorzugten Ausführungsform bildet das Relief des Projektionsobjekts ein Teilmodell eines Fortbewegungsmittels, wie eines Autos, eines Wasserfahrzeugs oder eines Flugzeugs aus. Die Teilmodelle beziehen sich in diesen Fällen auf Objekte, die üblicherweise zumindest im Wesentlichen achsensymmetrisch ausgebildet und dadurch besonders geeignet sind, um im Zuge einer Virtual Reality Darstellung vervollständigt zu werden.

Vorteilhafterweise kann das VR-Modell dabei als Vollmodell generiert werden, das im Bereich des Teilmodells teilweise gerendert ist und sich in Richtung der Grundfläche des Projektionsobjektes erstreckt. Durch eine derartige Überlagerung des Reliefs mit dem virtuellen Vollmodell erstreckt sich dieses in seiner virtuellen Darstellung in das Projektionsobjekt hinein beziehungsweise durch dessen Grundfläche hindurch. Hierdurch wird beim Erzeugen des VR-Modells an der Anzeigeeinrichtung ein besonderer optischer Effekt an dem augmentierten Projektionsobjekt erzielt.

Zudem ist es günstig, wenn sich das Teilmodell des Projektionsobjekts bezüglich des VR-Modells wenigstens von einer sich durch eine Hauptlängsachse des Vollmodells erstreckende Spiegelebene zu einer Außenseite erstreckt. Auf diese Weise erstreckt sich das Projektionsobjekt über wenigstens eine Symmetriehälfte des zu erstellenden VR-modells, wodurch das Projektionsobjekt besonders exakt mit der Hälfte des VR-Modells gerendert werden kann und dadurch eine besonders realistisch anmutende Augmentierung möglich wird. Alternativ hierzu ist es möglich, dass sich das Teilmodell senkrecht zur Grundfläche von der Außenseite über weniger als die Hälfte des zu erstellenden VR-Modells erstreckt, wie beispielsweise bei Modellen mit einer relativ großen Erstreckung senkrecht zur Grundfläche. In diesen Fällen wird das relativ kleine physische Teilmodell des Projektionsobjekts mit einem relativ großen VR-Modell überlagert, das sich virtuell durch die Grundfläche hindurch relativ weit in die Wand hinein erstreckt. Auf diese Weise kann trotz der relativ großen Erstreckung senkrecht zur Grundfläche eine relativ flache und kompakte Form des Projektionsobjekts beibehalten werden.

Vorteilhafterweise weist das Teilmodell des Projektionsobjekts senkrecht zu einer Grundfläche einen geringeren Maßstab als in paralleler Richtung zur Grundfläche auf. Durch die hierdurch erzielte Stauchung des Modells senkrecht zur Grundfläche des Projektionsobjekts kann dieses besonders flach und kompakt zur Verfügung gestellt werden. Dadurch kann das Projektionsobjekt beispielsweise als Gestaltungsobjekt in der Art eines Bildes an einer Wand angebracht werden. Der geringere Maßstab senkrecht zur Grundfläche ist dabei so gewählt, dass die Stauchung gegenüber der sich bei dem eigentlichen Maßstab ergebenden Erstreckung maximal 80%, vorzugsweise bis zu 40% beträgt. Alternativ hierzu kann das Teilmodell in alle Richtungen einen übereinstimmenden Maßstab aufweisen, wie insbesondere bei Modellen, die senkrecht zur Grundfläche beziehungsweise zur Wand eine relativ geringe Erstreckung aufweisen.

Zudem ist es günstig, wenn am Projektionsobjekt mehrere Marker vorgesehen sind, die von der Visualisierungsvorrichtung erkannt und zugeordnet werden können und die eine dreidimensionale Verteilung aufweisen. Die Marker dienen dabei zur Erstellung des VR-Modells in einer an einen jeweiligen Blickwinkel der Kamera in Echtzeit angepassten Perspektive. Durch die 3-dimensionale Verteilung der Marker kann dabei das Rendering unabhängig vom Blickwinkel besonders exakt an dem Teilmodell des Reliefs abgebildet werden, wodurch das an der Anzeigeeinrichtung wiedergegebene VR-Modell besonders realistisch am Projektionsobjekt abgebildet wird.

Dabei ist es vorteilhaft, wenn die Marker wenigstens teilweise durch Konturen des Reliefs gebildet sind. Hierdurch kann durch charakteristische Bereiche des Reliefs selbst eine sehr genaue und realistisch anmutende Überlagerung des an der Anzeigeeinrichtung wiedergegebenen Reliefs mit dem virtuellen VR-Modell und dadurch einer sehr realistisch anmutende Augmentierung des Projektionsobjekts insgesamt erzielt werden.

In einer besonders vorteilhaften Ausführungsform erstreckt sich das Projektionsobjekt von Wandbefestigungsmitteln weg, wie beispielsweise einer flächigen Rückseite oder einem Rahmen, an der/dem insbesondere haken-, ösen- und/oder schnurförmige Befestigungshilfen anbringbar oder angebracht sind. Alternativ hierzu können in die Grundplatte, die die Grundfläche bildet, selbst rückseitige Befestigungsmittel eingelassen sein beziehungsweise eingelassen werden, mittels denen das Projektionsobjekt an einer Wand befestigt werden kann. Hierdurch kann das Projektionsobjekt, insbesondere in einer leicht durch die Kamera zu erfassenden Position in der Art eines Bildes an einer Wand aufgehängt werden. Dadurch kann das Projektionsobjekt bereits für sich genommen als Dekorationsgegenstand oder Marketingobjekt fungieren.

Dabei ist es günstig, wenn die Wandbefestigungsmittel einen Bilderrahmen aufweisen. Hierdurch können dem Projektionsobjekt neben dem Relief weitere Bereiche optisch zugeordnet werden, in denen bei der Wiedergabe an der Anzeigeeinrichtung weitere optische Inhalte und Effekte virtuell generiert und über die Anzeigeeinrichtung abgebildet werden.

Vorteilhafterweise ist dabei zwischen dem Relief und einem Rand der Grundfläche beziehungsweise einem Rahmenteil des Bilderrahmens eine insbesondere ebene physische Projektionsfläche innerhalb der Grundfläche aufgespannt, an der bei der Wiedergabe an der Anzeigeeinrichtung über die bloße Wiedergabe des VR-Modells hinausgehende Informationen oder Darstellungen, wiedergegeben werden können.

Hierbei ist es günstig, wenn an der Elektronik neben den Modelldaten Zusatzinformationsdaten gespeichert sind, mittels denen Zusatzinformationen beziehungsweise zusätzliche virtuelle Grafiken an der Projektionsfläche generiert werden können. Bei der Wiedergabe an der Anzeigeeinrichtung können hierdurch im Bereich der Grundfläche des Projektionsobjekts zusätzliche Informationen wie Fahrzeugdaten, Detailansichten, Konstruktions- Explosionsdarstellungen oder Hintergrundbilder beziehungsweise -filme eingeblendet werden.

Ferner ist es günstig, wenn an der Elektronik neben den Modelldaten Audiofiles gespeichert sind, mittels denen eine akustische Ausgabe in Form von Sprache, Geräuschen, wie insbesondere Fahr- beziehungsweise Motorengeräusche, oder Musik, generiert werden können, wie beispielsweise über Akustikmittel in Form von Lautsprechern, die über eine Verkabelung oder kabellos mit der Elektronik verbunden sind.

Bevorzugterweise können die Modelldaten, die Zusatzinformationsdaten und/oder die Audiofiles dabei auf die Elektronik heruntergeladen werden, wie beispielsweise aus dem Internet. Auf diese Weise kann der Benutzer die gewünschten Funktionen individuell zusammenstellen oder bedarfsweise erweitern.

Zudem ist es günstig, wenn wenigstens die Kamera und die Anzeigeeinrichtung oder die Visualisierungsvorrichtung insgesamt durch eine handelsübliche tragbare Computereinrichtung, wie beispielsweise ein Mobiltelefon, einen Tabletcomputer oder eine VR-Brille gebildet ist, wodurch die für die Visualisierungsanordnung benötigte Hardware relativ kostengünstig zur Verfügung gestellt werden kann.

In einer bevorzugten Ausführungsform ist das Projektionsobjekt wenigstens teilweise aus einem Beton- oder Asphaltmaterial hergestellt. Hierdurch kann insbesondere das Relief mit einem ausreichend hohen Detaillierungsgrad hergestellt werden. Zudem besteht im Falle von Fahrzeugmodellen auf diese Weise ein thematischer Zusammenhang zwischen dem für das Relief verwendeten Material, das zumindest hinsichtlich der verwendeten Bestandteile eine große Übereinstimmung mit üblichem Straßenbaumaterial aufweist. Durch diesen inhaltlichen Zusammenhang kann beim Betrachter ein besonderer Effekt durch das augmentierte Projektionsobjekt erzeugt werden.

Darüber hinaus wird die oben genannte Aufgabe durch ein Verfahren zum Betrieb einer Visualisierungsanordnung in einer der oben genannten Ausführungsformen gelöst, bei dem in einem ersten Schritt die Kamera zur optischen Erfassung auf das physische Projektionsobjekt gerichtet wird, in einem zweiten Schritt mittels der Datenverarbeitungssoftware Bilddaten des physischen Projektionsobjektes auf Basis der optischen Erfassung erstellt werden, in einem dritten Schritt die erstellten Bilddaten mit den gespeicherten Modelldaten überlagert werden, um das gerenderte VR-Modell zu erstellen, und in einem vierten Schritt das physische Projektionsobjekt mit dem überlagernden gerenderten VR-Modell an der Anzeigeeinrichtung wiedergegeben wird. Dabei wird das Projektionsobjekt vor dem ersten Schritt, in der Art eines Bildes, an einer Wand befestigt. Im vierten Schritt wird dann das am Relief gerenderte VR-Modell angezeigt. Hierbei wird das durch das Relief gebildete Teilmodell durch das VR-Modell in Richtung der Wand erweitert beziehungsweise vervollständigt, so dass das augmentierte Modell des Fortbewegungsmittels für den Benutzer aus möglichst vielen Perspektiven und möglichst vollständig einsehbar ist. Auf diese Weise steht zum einen ein 3-dimensionales physisches Teilmodell zur Verfügung, das in der Art eines Bildes an einer Wand befestigt und präsentiert werden kann. Über die optische Erfassung mittels der Kamera und die Verarbeitung über die Elektronik kann das Teilmodell an der Anzeigeeinrichtung vervollständigt und mit verschiedenen Details und Ausstattungsmerkmalen versehen werden, wie beispielsweise hinsichtlich Lackierung, Felgen, Bereifung und Türgriffen. Darüber hinaus können an der Anzeigeeinrichtung neben dem eigentlichen VR-Modell zusätzliche Informationen oder Animationen am Projektionsobjekt eingeblendet werden. In jedem Fall kann das selbst als 3-dimensionales Dekorations- oder Präsentationsobjekt dienende Projektionsobjekt in seiner Darstellung an der Anzeigeeinrichtung nahezu beliebig erweitert und mit Inhalten ergänzt werden. Dem Betrachter wird dadurch eine völlig neuartige Form eines augmentierten Dekorations- beziehungsweise Präsentationsgegenstandes zur Verfügung gestellt, bei dem ein virtuelles Modell fest in einen physisch wahrnehmbaren bildartigen Dekorations- oder Präsentationsgegenstand eingebettet ist.

Dabei ist es günstig, wenn mittels der an der Elektronik gespeicherten Zusatzinformationsdaten die Zusatzinformationen generiert und an der Anzeigeeinrichtung neben dem VR-Modell angezeigt werden, wodurch beispielsweise bestimmte Informationen zum dargestellten Modell, wie beispielsweise Fahrzeugdaten, Detailzeichnungen oder Explosionsdarstellungen zu bestimmten Konstruktionsteilen in besonders ansprechender Weise angezeigt werden können. Darüber hinaus können durch die Zusatzinformationsdaten zumindest Teile des VR-Modells animiert werden oder es können Hintergrundfilme eingeblendet werden.

Vorteilhafterweise können im vierten Schritt zusätzlich Audiofiles ausgewählt und deren Inhalt über die Akustikmittel ausgegeben werden. Hierdurch können zusätzliche Informationen auch akustisch ausgegeben werden. Ferner können Geräusche, wie beispielsweise typische Motoren- beziehungsweise Fahrgeräusche ausgegeben werden oder bestimmte Animationen auch vertont werden.

Zudem ist es günstig, wenn die Modelldaten, die Zusatzinformationsdaten und/oder die Audiofiles vor ihrer Ausgabe in einem Auswahlmenü angezeigt werden, wodurch sie vom Benutzer individuell beziehungsweise bedarfsweise ausgewählt und aktiviert werden können.

Vorteilhafterweise können die Modelldaten, die Zusatzinformationsdaten und/oder die Audiofiles über eine Internetplattform ausgewählt und auf die Elektronik der Visualisierungsvorrichtung heruntergeladen werden. Auf diese Weise können die über die Visualisierungsanordnung darstellbaren Inhalte bedarfsweise ausgewählt und nachträglich verändert oder erweitert werden.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Ansicht einer Visualisierungsanordnung,
- Figur 2: eine dachseitige Draufsicht auf ein Projektionsobjekt der Visualisierungsanordnung in Richtung II aus Fig. 1,
- Figur 3: eine Frontansicht des Projektionsobjekts in Richtung III aus Fig. 2,
- Figur 4: eine Heckansicht des Projektionsobjekts in Richtung IV aus Fig. 2,
- Figur 5: eine bodenseitige Ansicht des Projektionsobjekts in Richtung V aus Fig. 4
- Figur 6: eine Ansicht der Visualisierungsanordnung während der Verwendung durch einen Benutzer und
- Figur 7: eine vergrößerte Ansicht der Visualisierungsanordnung nach Figur 6 während einer perspektivischen Wiedergabe der Frontseite eines augmentierten Modells.

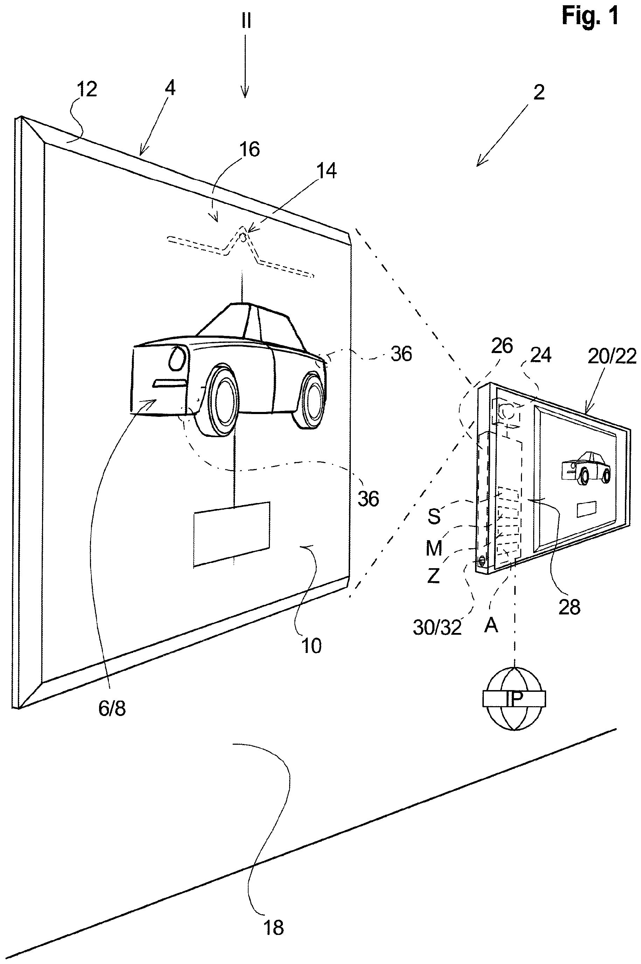

Fig. 1 zeigt eine Visualisierungsanordnung 2 zur Darstellung des Modells eines Fortbewegungsmittels in beispielhafter Form eines Automobils. Hierbei weist die Visualisierungsanordnung 2 ein physisches Projektionsobjekt 4 auf, an dem ein 3-dimensionales Teilmodell 6 des Fortbewegungsmittels ausgeformt ist. Das Teilmodell 6 wird dabei durch ein Relief 8 beziehungsweise ein Hochrelief gebildet, das sich von einer Grundfläche 10 des Projektionsobjekts 4 weg erstreckt, die beispielsweise durch eine sich seitlich über das Relief 8 hinaus erstreckende Grundplatte oder einen Spiegel gebildet ist. Die Grundfläche 10 wird dabei durch einen Rahmen 12 begrenzt und weist an einer Rückseite 14 Wandbefestigungsmittel 16 auf, die beispielsweise haken-, ösen- und/oder schnurförmig ausgebildet sind und mittels denen das Projektionsobjekt 4 in der Art eines Bildes an einer Wand 18 befestigt werden kann.

Zudem weist die Visualisierungsanordnung 2 eine Visualisierungsvorrichtung 20 zur optischen Erfassung und Wiedergabe des Projektionsobjekts 4 auf. Hierzu ist die Visualisierungsvorrichtung 20 beispielhaft durch eine tragbare Computervorrichtung 22 gebildet, die eine Kamera 24 zur Aufnahme des Projektionsobjekts 4, eine Elektronik 26 zur Verarbeitung der gewonnenen Bilddaten mittels einer gespeicherten Datenverarbeitungssoftware S sowie eine Anzeigeeinrichtung 28 in Form eines Displays oder Monitors zur Wiedergabe von generierten Bildinhalten auf. Zudem sind in der Elektronik 26 der Visualisierungsvorrichtung 20 Modelldaten M, Zusatzinformationsdaten Z und Audiodateien A gespeichert. Zur Wiedergabe Letzterer kann die Computervorrichtung 22 selbst eingebaute Akustikmittel 30, wie beispielsweise in Form eines Lautsprechers 32 oder eines Kopfhöreranschlusses (nicht dargestellt) aufweisen. Alternativ dazu kann über die Elektronik 26 auch eine kabellose Verbindung zu externen Akustikmitteln 30, wie beispielsweise Bluetooth-Lautsprechern oder -Kopfhörern hergestellt werden.

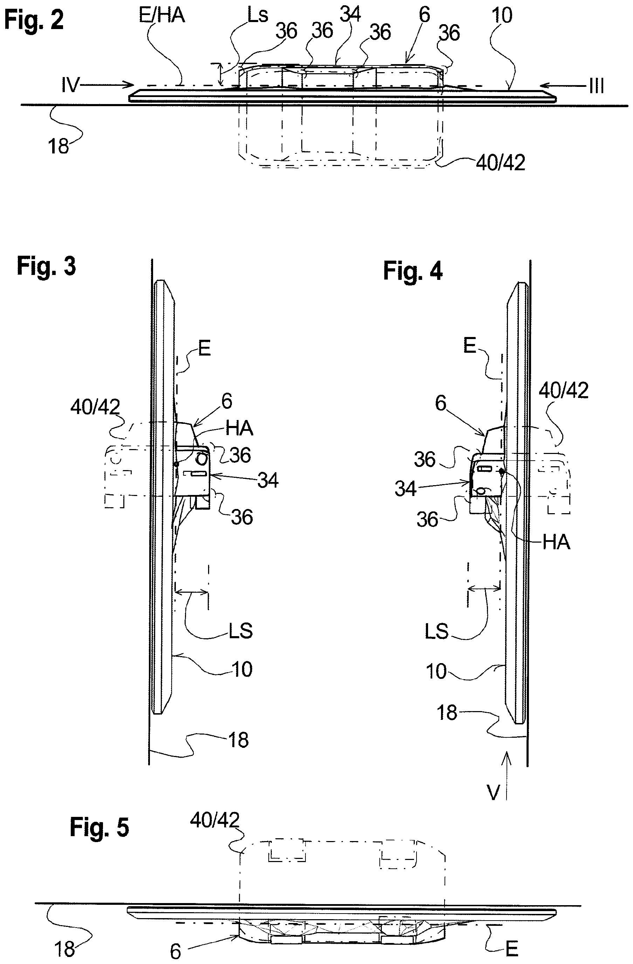

Das durch das Relief 8 gebildete Teilmodell ist vorzugsweise aus einem typischen Straßenbaumaterial, wie beispielsweise einem Beton- oder Asphaltmaterial gebildet, und erstreckt sich gemäß den Figuren 2 bis 5 wenigstens von einer Spiegelebene E, die durch eine Hauptlängsachse HA des darzustellenden Automobils verläuft, bis zu einer Außenseite 34 über eine quer zur Grundfläche 10 stehende Seitenerstreckung Ls. Über diese Seitenerstreckung Ls hinweg weist das Teilmodell 6 in der dargestellten Ausführungsform einen geringeren Maßstab auf als in Richtung der Hauptlängsachse HA. Die Seitenerstreckung Ls ist dabei um maximal 80% gegenüber einer sich beim sonstigen Maßstab des Modells ergebenden Erstreckung gestaucht. Im Ausführungsbeispiel der Figuren 2 bis 5 beträgt die dargestellte Seitenerstreckung Ls dabei etwa 60% der Erstreckung, die sich nach dem in Richtung der Hauptlängsachse HA verwendeten Maßstab ergeben würde. Hierdurch sind die Seitenerstreckung Ls und die zugehörigen Front- und Heckansichten gemäß den Figuren 3 und 4 gegenüber den Ansichten in Richtung der Hauptlängsachse HA deutlich gestaucht. Auf diese Weise ist es möglich, das Automobil über mehr als die Hälfte seiner Seitenerstreckung Ls darzustellen und dabei dennoch eine relativ flache und kompakte Form des Projektionsobjekts 4 beizubehalten.

An dem Projektionsobjekt 4 sind zudem mehrere Marker 36 vorgesehen, die durch bestimmte charakteristische Konturen beziehungsweise Konturenabschnitte des Reliefs 8 gebildet sind, und deren Positionsdaten in der Elektronik 26 gespeichert sind. Dabei sine die gespeicherten und auf diese Weise von der Elektronik 26 detektierbaren Marker 36 3-dimensional über das Relief 8 und/oder das übrigen Projektionsobjekt 4 verteilt, so dass die Visualisierungsvorrichtung 20 durch die Erfassung und Zuordnung der Marker 36 und der hinterlegten Positionsdaten in Echtzeit die Position und den Blickwinkel der Kamera 24 gegenüber dem Projektionsobjekt 4 bestimmen und für die Bildbearbeitung verwenden kann.

Dies ermöglicht dabei die Erstellung eines VR-Modells 40, wie beispielsweise in Form eines Vollmodells 42, das im Bereich des durch das Relief 8 gebildeten Teilmodells 6 gerendert ist und sich virtuell in die Grundfläche 10 hinein beziehungsweise durch diese hindurch erstreckt, wie in den Figuren 2 bis 5 durch strichpunktierte Linien dargestellt. Dieses Vollmodell 42 wird dem Benutzer B an der Anzeigeeinrichtung 28 angezeigt, wobei das Relief 8 eine Projektionsoberfläche bildet an der das Vollmodell 42 über die Marker 36 unabhängig von der jeweiligen Blickrichtung "verankert" ist.

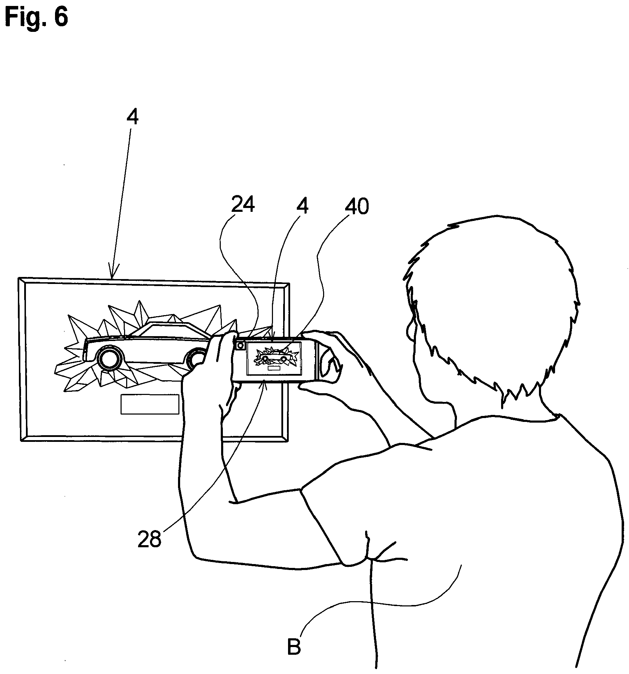

Auf diese Weise kann das Projektionsobjekt 4 über Relief gegenüber dem Benutzer B augmentiert und mit vielseitigen Inhalten präsentiert beziehungsweise "zum Leben erweckt" werden. Wie in Figur 6 dargestellt, richtet der Benutzer hierzu die Kamera 24 in einem ersten Schritt auf das physische Projektionsobjekt 4 um dieses optisch zu erfassen. In einem zweiten Schritt werden hierbei mit Hilfe der Datenverarbeitungssoftware S der Elektronik 26 Bilddaten des Projektionsobjekts 4 erstellt und in einem dritten Schritt mit den gespeicherten Modelldaten M überlagert. Auf diese Weise erhält man das VR-Modell 40, das mittels der Marker 36 am Relief gerendert ist und in einem vierten Schritt vor dem Hintergrund des übrigen Projektionsobjekts 4 an der Anzeigeeinrichtung 28 angezeigt wird.

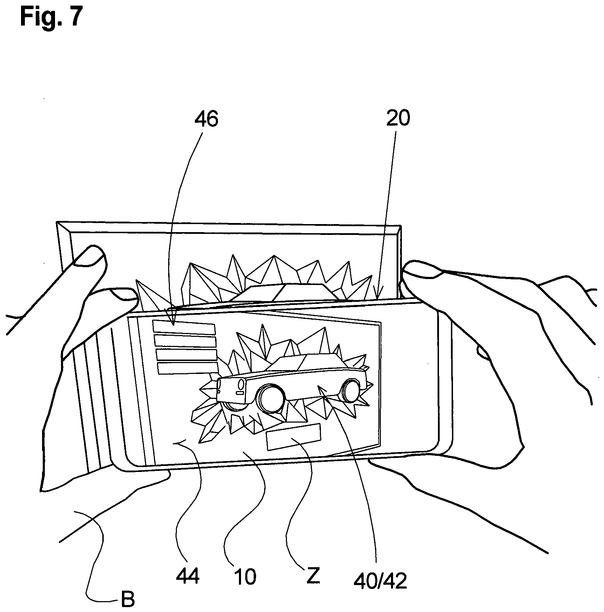

Wie insbesondere aus Figur 7 zu entnehmen ist, kann sich der Benutzer das VR-Modell 40 je nach Blickrichtung der Kamera 26 als Vollmodell 42 anzeigen lassen, das sich in die ebenfalls angezeigte Grundfläche 10 hinein erstreckt. Durch entsprechende Positionierung der Visualisierungsvorrichtung 20 kann sich der Benutzer B dabei eine dachseitige Draufsicht gemäß Figur 2, eine Frontansicht gemäß Figur 3, eine Heckansicht gemäß Figur 4, eine bodenseitige Ansicht gemäß Figur 5, eine Seitenansicht gemäß Figur 6 und alle Zwischenansichten des Vollmodells 42 anzeigen lassen.

Wie aus Figur 7 ferner zu entnehmen ist, können neben dem VR-Modell 40 zusätzliche Informationsinhalte I aus den gespeicherten Zusatzinformationsdaten Z angezeigt werden. Hierzu bildet das Projektionsobjekt 4 zwischen dem Relief 8 und einem Rand der Grundfläche beziehungsweise dem Rahmen 12 eine im Wesentlichen ebene physische Projektionsfläche 44 innerhalb der Grundfläche 10 aus. Deren Wiedergabe an der Anzeigeeinrichtung 28 kann dann zur Darstellung der zusätzlichen Informationsinhalte I genutzt werden. Die zusätzlichen Informationsinhalte I können dabei beispielsweise durch Fahrzeugdaten, Informationen zu Technik und/oder Historie des Fahrzeugs oder zur Wiedergabe von Detail oder Explosionsdarstellung von Konstruktionsteilen dienen.

Ferner können in Zusammenhang mit der Anzeige des VR-Modells 40 auch Animationen wiedergegeben oder Hintergrundbilder und/oder -Filme eingeblendet werden. Zudem können mittels der Audiodateien auch Sprachausgaben, Geräusche oder Musikstücke generiert werden, deren Ausgabe über die Akustikmittel 30 erfolgt.

Die jeweils gewünschten Varianten des VR-Modells und die auszugebenden Informationsinhalte können dabei vom Benutzer B vorzugsweise über ein ebenfalls innerhalb der Projektionsfläche 44 angezeigtes Auswahlmenü 46 individuell ausgewählt werden.

Ferner können die auswählbaren Modelldaten M, Zusatzinformationsdaten Z und/oder Audiodateien A beispielsweise über eine Internetplattform IP ausgewählt und auf die Elektronik 26 der Visualisierungsvorrichtung 20 heruntergeladen werden, die hierzu mit der Internetplattform IP verbunden ist, wie in Figur 1 dargestellt. Auf diese Weise kann der Benutzer die Visualisierungsvorrichtung 20 und die Visualisierungsanordnung 2 insgesamt individuell einrichten beziehungsweise erweitern.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Visualisierungsanordnung (2) mit einem 3-dimensionsalen physischen Projektionsobjekt (4) und mit einer elektronischen Visualisierungsvorrichtung (20), die
eine Kamera (24) zur optischen Erfassung des physischen Projektionsobjektes (4), eine Elektronik (26) mit einer Datenverarbeitungssoftware (S), mittels der Bilddaten aus der optischen Erfassung des physischen Projektionsobjektes (4) und ein gerendertes VR-Modell (40) auf Basis der erstellten Bilddaten und gespeicherter Modelldaten (M) generierbar sind,
sowie eine Anzeigeeinrichtung (28) zum Anzeigen des mit dem gerenderten VR-Modell (40) überlagerten physischen Projektionsobjekts (4) aufweist,
wobei das physische Projektionsobjekt (4) ein Relief (8) ausformt und eine Grundfläche (10) aufweist, von der sich das Relief (8) weg erstreckt, und wobei das Projektionsobjekt (4) in der Art eines an einer Wand zu befestigenden Bildes handhabbar ist, bei dem das Relief (8) ein Teilmodell (6) ausformt, das mit dem virtuell vervollständigten VR-Modell (40) überlagert wird, welches sich virtuell durch die Grundfläche (10) hindurch erstreckt.

2. Visualisierungsanordnung nach Anspruch 1, **dadurch gekennzeichnet, dass** das Relief (8) des Projektionsobjekts (4) ein Teilmodell (6) eines Fortbewegungsmittels ausbildet.

3. Visualisierungsanordnung nach Anspruch 2, **dadurch gekennzeichnet, dass** das VR-Modell (40) als virtuelles Vollmodell (42) generierbar ist, das im Bereich des Teilmodells (6) teilweise gerendert ist.

4. Visualisierungsanordnung nach Anspruch 3, **dadurch gekennzeichnet, dass** sich das Teilmodell (6) des Projektionsobjekts (4) bezüglich des VR-Modells (40) wenigstens von einer sich durch eine Hauptlängsachse (HA) des Vollmodells (42) erstreckende Spiegelebene (E) zu einer Außenseite (34) erstreckt.

5. Visualisierungsanordnung nach einem der Ansprüche 2 bis 4, **dadurch gekennzeichnet, dass** das Teilmodell (6) des Projektionsobjekts (4) senkrecht zur Grundfläche (10) einen geringeren Maßstab als in paralleler Richtung zur Grundfläche (10) aufweist.

6. Visualisierungsanordnung nach einem der Ansprüche 1 bis 5, **dadurch gekennzeichnet, dass** am Projektionsobjekt (4) mehrere Marker (36) zur in Echtzeit und an einen Blickwinkel der Kamera (24) angepassten Erstellung des VR-Modells (40) vorgesehen sind und die Marker (36) insbesondere wenigstens teilweise durch Konturen des Reliefs (8) gebildet sind und eine dreidimensionale Verteilung aufweisen.

7. Visualisierungsanordnung nach einem der Ansprüche 1 bis 6, **dadurch gekennzeichnet, dass** sich das Projektionsobjekt (4) von Wandbefestigungsmitteln (16) weg erstreckt, die insbesondere einen Rahmen (12) aufweisen.

8. Visualisierungsanordnung nach einem der Ansprüche 1 bis 7, **dadurch gekennzeichnet, dass** zwischen dem Relief (8) und einem Rand der Grundfläche (10) eine physische Projektionsfläche (44) aufgespannt ist.

9. Visualisierungsanordnung nach einem der Ansprüche 1 bis 8, **dadurch gekennzeichnet, dass** an der Elektronik neben den Modelldaten (M) Zusatzinformationsdaten (Z), mittels denen Zusatzinformationen an der Projektionsfläche (44) generierbar sind und/oder Audiofiles (A) gespeichert sind, mittels denen eine akustische Ausgabe über Akustikmittel (30) generierbar ist.

10. Visualisierungsanordnung nach einem der Ansprüche 1 bis 9, **dadurch gekennzeichnet, dass** die Modelldaten (M), die Zusatzinformationsdaten (Z) und/oder die Audiofiles (A) auf die Elektronik (26) herunterladbar sind.

11. Visualisierungsanordnung nach einem der Ansprüche 1 bis 10, **dadurch gekennzeichnet, dass** wenigstens die Kamera (24) und die Anzeigeeinrichtung (28) durch eine tragbare Computereinrichtung gebildet sind.

12. Visualisierungsanordnung nach einem der Ansprüche 1 bis 11, **dadurch gekennzeichnet, dass** das Projektionsobjekt (4) wenigstens teilweise aus einem Betonmaterial hergestellt ist.

13. Verfahren zum Betrieb einer Visualisierungsanordnung nach einem der Ansprüche 1 bis 12, bei dem:
in einem ersten Schritt die Kamera (24) zur optischen Erfassung auf das physische Projektionsobjekt (4) gerichtet wird, das ein Relief (8) ausformt,
in einem zweiten Schritt mittels der Datenverarbeitungssoftware (S) Bilddaten des physischen Projektionsobjektes (4) auf Basis der optischen Erfassung erstellt werden,
in einem dritten Schritt die erstellten Bilddaten mit den gespeicherten Modelldaten (M) überlagert werden, um das gerenderte VR-Modell (40) zu erstellen, und
in einem vierten Schritt das physische Projektionsobjekt (4) mit dem überlagernden gerenderten VR-Modell (40) an der Anzeigeeinrichtung (28) wiedergegeben wird,
wobei vor dem ersten Schritt das Projektionsobjekt (4) an einer Wand (18) befestigt und im vierten Schritt ein am Relief (8) ausgeformtes Teilmodell (6) durch das überlagernde VR-Modell (40) in Richtung der Wand (18) erweitert wird.

14. Verfahren nach Anspruch 13, **dadurch gekennzeichnet, dass** im vierten Schritt mittels der an der Elektronik (26) gespeicherten Zusatzinformationsdaten (Z) die Zusatzinformationen generiert und an der Anzeigeeinrichtung (28) neben dem VR-Modell (40) angezeigt und/oder zusätzlich Audiofiles (A) ausgewählt und deren Inhalt über die Akustikmittel (30) ausgegeben werden und die Modelldaten (M), Zusatzinformationsdaten (Z) und/oder die Audiofiles (A) insbesondere vor ihrer Ausgabe in einem Auswahlmenü (46) angezeigt werden.

15. Verfahren nach einem der Ansprüche 13 bis 14, **dadurch gekennzeichnet, dass** die Modelldaten (M), die Zusatzinformationsdaten (Z) und/oder die Audiofiles (A) über eine Internetplattform (IP) ausgewählt und auf die Elektronik (26) der Visualisierungsvorrichtung (20) heruntergeladen werden können.

## Claims

1. Visualisation assembly (2) comprising a three-dimensional physical projection object (4) and an electronic visualisation device (20), which
comprises a camera (24) for optically capturing the physical projection object (4), electronics (26) with data processing software (S), by means of which the image data can be generated from the optical capturing of the physical projection object (4) and a rendered VR model (40) can be generated on the basis of the image data created and the stored model data (M),
as well as a display apparatus (28) for displaying the physical projection object (4) superimposed with the rendered VR model (40),
wherein the physical projection object (4) forms a relief (8) and comprises a surface (10), from which the relief (8) extends outwards, and wherein the projection object (4) can be handled in the manner of a picture to be mounted on a wall,
wherein the relief (8) forms a partial model (6), which is superimposed with the virtual complete VR model (40), which extends virtually through the surface (10).

2. Visualisation assembly according to claim 1, **characterised in that** the relief (8) of the projection object (4) forms a partial model (6) of a means of transport.

3. Visualisation assembly according to claim 2, **characterised in that** the VR model (40) can be generated as a virtual full model (42), which is partially rendered in the region of the partial model (6).

4. Visualisation assembly according to claim 3, **characterised in that** the partial model (6) of the projection object (4) extends relative to the VR model (40) at least from a mirror plane (E) extending through a main longitudinal axis (HA) of the full model (42) to an outer surface (34).

5. Visualisation assembly according to any of claims 2 to 4, **characterised in that** the partial model (6) of the projection object (4) has a smaller scale perpendicular to the surface (10) than in a parallel direction to the surface (10).

6. Visualisation assembly according to any of claims 1 to 5, **characterised in that** a plurality of markers (36) are provided on the projection object (4) for creating the VR model (40) in real time and adapted to a viewpoint of the camera (24) and the markers (36) are formed, in particular, at least partly, by the contours of the relief (8) and a three-dimensional distribution.

7. Visualisation assembly according to any of claims 1 to 6, **characterised in that** the projection object (4) extends outwards from the wall mounting means (16), which have, in particular, a frame (12).

8. Visualisation assembly according to any of claims 1 to 7, **characterised in that** a physical projection surface (44) spans the distance between the relief (8) and an edge of the surface (10).

9. Visualisation assembly according to any of claims 1 to 8, **characterised in that**, in addition to the model data (M), additional information data (Z), by means of which additional information can be generated on the projection surface (44) and/or audio files (A) by means of which an acoustic output can be generated via acoustic means (30), are stored in the electronics.

10. Visualisation assembly according to any of claims 1 to 9, **characterised in that** the model data (M), the additional information data (Z) and/or the audio files (A) can be downloaded to the electronics (26).

11. Visualisation assembly according to any of claims 1 to 10, **characterised in that** at least the camera (24) and the display apparatus (28) are formed by portable computer equipment.

12. Visualisation assembly according to any of claims 1 to 11, **characterised in that** the projection object (4) is at least partly made from a concrete material.

13. Method for operating a visualisation assembly according to any of claims 1 to 12, wherein:
in a first step, the camera (24) is focused for optical capturing on the physical projection object (4), which forms a relief (8),
in a second step, by means of the data processing software (S), image data for the physical projection object (4) is created on the basis of optical capturing,
in a third step, the image data created is superimposed with the stored model data (M), in order to create the rendered VR model (40), and
in a fourth step, the physical projection object (4) with the superimposed rendered VR model (40) is reproduced on the display apparatus (28),
wherein, before the first step, the projection object (4) is mounted on a wall (18) and, in the fourth step, a partial model (6) formed on the relief (8) by the superimposed VR model (40) is expanded in the direction of the wall (18).

14. Method according to claim 13, **characterised in that**, in the fourth step, by means of the additional information data (Z) stored in the electronics (26), the additional information is generated and displayed on the display apparatus (28) in addition to the VR model (40) and/or additional audio files (A) are selected and their content output via the acoustic means (30) and the model data (M), additional information data (Z) and/or the audio files (A), in particular before they are output, are displayed in a drop-down menu (46).

15. Method according to any of claims 13 to 14, **characterised in that** the model data (M), the additional information data (Z) and/or the audio files (A) are selected via an internet platform (IP) and can be downloaded to the electronics (26) of the visualisation device (20).

## Revendications

1. Agencement de visualisation (2) avec un objet de projection physique (4) tridimensionnel et avec un dispositif de visualisation électronique (20), lequel présente
une caméra (24) pour la saisie optique de l'objet de projection physique (4), une électronique (26) avec un logiciel de traitement de données (S) au moyen duquel des données d'image provenant de la saisie optique de l'objet de projection physique (4) et un modèle VR restitué (40) peuvent être générés sur la base des données d'image créées et des données de modèle (M) enregistrées,
ainsi qu'un appareil d'affichage (28) pour afficher l'objet de projection physique (4) superposé au modèle VR (40) restitué,
dans lequel l'objet de projection physique (4) forme un relief (8) et présente une surface de base (10) à partir de laquelle le relief (8) s'étend, et dans lequel l'objet de projection (4) peut être manipulé à la manière d'un tableau à fixer sur un mur,
dans lequel le relief (8) forme un modèle partiel (6) qui est superposé au modèle VR virtuellement complété (40) qui s'étend virtuellement à travers la surface de base (10).

2. Agencement de visualisation selon la revendication 1, **caractérisé en ce que** le relief (8) de l'objet de projection (4) forme un modèle partiel (6) d'un moyen de locomotion.

3. Agencement de visualisation selon la revendication 2, **caractérisé en ce que** le modèle VR (40) peut être généré sous forme de modèle virtuel complet (42) lequel est partiellement restitué dans la zone du modèle partiel (6).

4. Agencement de visualisation selon la revendication 3, **caractérisé en ce que** le modèle partiel (6) de l'objet de projection (4) s'étend par rapport au modèle VR (40) au moins depuis un plan de miroir (E) s'étendant à travers un axe longitudinal principal (HA) du modèle complet (42) jusqu'à un côté extérieur (34).

5. Agencement de visualisation selon l'une quelconque des revendications 2 à 4, **caractérisé en ce que** le modèle partiel (6) de l'objet de projection (4) présente une échelle plus petite perpendiculairement à la surface de base (10) que dans la direction parallèle à la surface de base (10).

6. Agencement de visualisation selon l'une quelconque des revendications 1 à 5, **caractérisé en ce que** plusieurs marqueurs (36) sont prévus sur l'objet de projection (4) pour la création en temps réel et adaptée à un angle de vue de la caméra (24) du modèle VR (40) et les marqueurs (36) sont en particulier formés au moins partiellement par des contours du relief (8) et présentent une répartition tridimensionnelle.

7. Agencement de visualisation selon l'une quelconque des revendications 1 à 6, **caractérisé en ce que** l'objet de projection (4) s'étend à l'écart de moyens de fixation murale (16), lesquels présentent en particulier un cadre (12).

8. Agencement de visualisation selon l'une quelconque des revendications 1 à 7, **caractérisé en ce qu'**une surface de projection physique (44) est tendue entre le relief (8) et un bord de la surface de base (10).

9. Agencement de visualisation selon l'une quelconque des revendications 1 à 8, **caractérisé en ce que** des données d'informations supplémentaires (Z), au moyen desquelles des informations supplémentaires peuvent être générées sur la surface de projection (44) et/ou des fichiers audio (A), au moyen desquels une sortie acoustique peut être générée par des moyens acoustiques (30), sont mémorisés sur l'électronique en plus des données de modèle (M).

10. Agencement de visualisation selon l'une quelconque des revendications 1 à 9, **caractérisé en ce que** les données de modèle (M), les données d'informations supplémentaires (Z) et/ou les fichiers audio (A) peuvent être téléchargés sur l'électronique (26).

11. Agencement de visualisation selon l'une quelconque des revendications 1 à 10, **caractérisé en ce qu'**au moins la caméra (24) et l'appareil d'affichage (28) sont formés par un dispositif informatique portatif.

12. Agencement de visualisation selon l'une quelconque des revendications 1 à 11, **caractérisé en ce que** l'objet de projection (4) est au moins partiellement fabriqué à partir d'un matériau en béton.

13. Procédé de fonctionnement d'un agencement de visualisation selon l'une quelconque des revendications 1 à 12, dans lequel :
au cours d'une première étape, la caméra (24) est dirigée en vue d'une détection optique sur l'objet de projection physique (4) qui forme un relief (8),
au cours d'une deuxième étape, des données d'image de l'objet de projection physique (4) sont créées au moyen du logiciel de traitement de données (S) sur la base de la détection optique,
au cours d'une troisième étape, les données d'image créées sont superposées aux données de modèle (M) stockées pour créer le modèle VR (40) restitué, et
au cours d'une quatrième étape, l'objet de projection physique (4) est reproduit avec le modèle VR (40) restitué superposé sur l'appareil d'affichage (28),
dans lequel, avant la première étape, l'objet de projection (4) est fixé à un mur (18) et, au cours de la quatrième étape, un modèle partiel (6) formé sur le relief (8) est élargi en direction du mur (18) par le modèle VR (40) qui se superpose.

14. Procédé selon la revendication 13, **caractérisé en ce qu'**au cours de la quatrième étape, les informations supplémentaires sont générées au moyen des données d'informations supplémentaires (Z) mémorisées sur l'électronique (26) et sont affichées sur l'appareil d'affichage (28) à côté du modèle VR (40) et/ou des fichiers audio (A) supplémentaires sont sélectionnés et leur contenu est émis par l'intermédiaire des moyens acoustiques (30) et les données de modèle (M), les données d'informations supplémentaires (Z) et/ou les fichiers audio (A) sont affichés en particulier avant leur sortie dans un menu de sélection (46).

15. Procédé selon l'une quelconque des revendications 13 à 14, **caractérisé en ce que** les données de modèle (M), les données d'informations supplémentaires (Z) et/ou les fichiers audio (A) peuvent être sélectionnés et téléchargés sur l'électronique (26) du dispositif de visualisation (20) via une plateforme Internet (IP).
